# EUROPEAN PATENT APPLICATION

(11) **EP 2 843 544 A2**
(43) Date of publication of application: **04.03.2015**
(21) Application number: 14179013.9
(22) Date of filing: 29.07.2014
(51) Int. Cl.: G06F 9/30

(54) **Arithmetic processing unit and method for controlling arithmetic processing unit**

(30) Priority: 12.08.2013 JP 2013167781
(71) Applicant: FUJITSU LIMITED, Kawasaki-shi, Kanagawa 211-8588 (JP)
(72) Inventor: Okazaki, Ryohei, Kawasaki-shi, Kanagawa 211-8588 (JP); Suzuki, Takashi, Kawasaki-shi, Kanagawa 211-8588 (JP); Fusejima, Atushi, Kawasaki-shi, Kanagawa 211-8588 (JP)
(74) Representative: Lewin, David Nicholas

(57) **Abstract**

An arithmetic processing unit including a branch instruction execution management unit configured to accumulate a branch instruction waiting so be executed and to manage completion of a branch instruction, a completion processing waiting storage unit configured to accumulate an identifier of an instruction waiting for completion processing according to an execution sequence of a program, a completion processing unit configured to activate resource update processing due to execution of a branch instruction when the completion processing unit receives an execution completion report for the branch instruction from the branch instruction execution management unit and identified by the identifier, and a promotion unit configured to, when an identifier accumulated at the top of the completion processing waiting storage unit indicates a branch instruction, cause the completion processing unit to activate the resource update processing without waiting for the execution completion report for the branch instruction.

## Description

### FIELD

The embodiments discussed herein are related to an arithmetic processing unit and a method for controlling the arithmetic processing unit.

### BACKGROUND

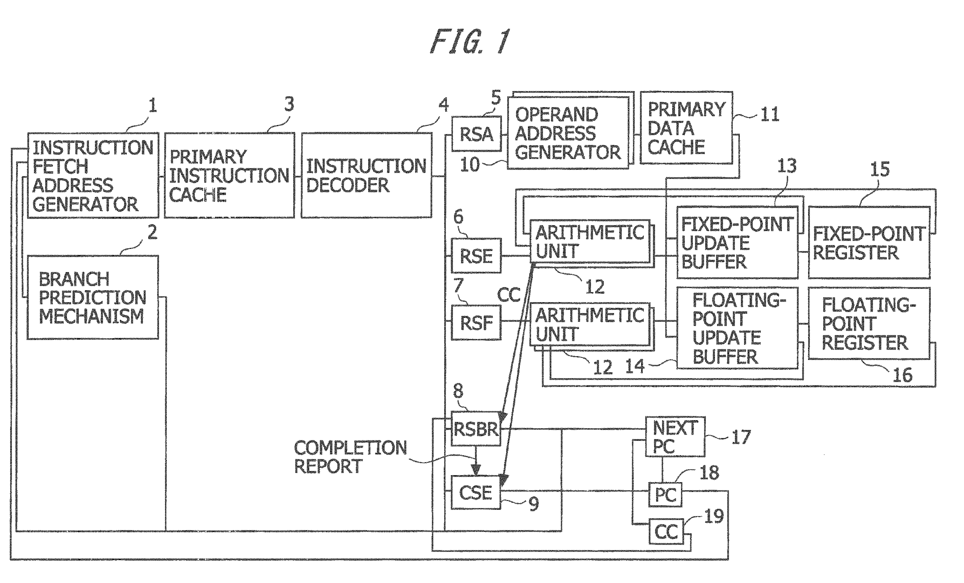

FIG. 1 is a diagram illustrating the configuration of a superscalar processor. The configuration of the superscalar processor will be described with reference to FIG. 1. The superscalar processor illustrated in FIG. 1 has an instruction fetch address generator 1 which generates an instruction fetch address, a branch prediction mechanism 2 which performs branch prediction for a branch instruction, a primary instruction cache 3 which caches an instruction, an instruction decoder 4 which decodes a fetched instruction, reservation stations (an RSA 5, an RSE 6, an RSF 7, and an RSBR 8) which accumulate a decoded instruction, a commit stack entry (CSE) 9 which performs completion processing of an instruction, an operand address generator 10 which generates an operand address, a primary data cache 11 which stores data, arithmetic units 12 which execute a decoded instruction, update buffers (a fixed-point update buffer 13 and a floating-point update buffer 14) which store a result of executing an operation, registers (a fixed-point register 15 and a floating-point register 16) which are used at the time of execution of an operation, program counters (a NEXT program counter (NEXT PC) 17 and a program counter (PC) 18) which hold the address of an instruction, and a condition code (CC) register 19 which stores a condition code used for condition determination.

Execution of an instruction in the processor in FIG. 1 will be illustrated in the manner below. An instruction is fetched from the primary instruction cache 3 according to the execution sequence of a program. The fetched instruction is decoded by the instruction decoder 4. The instruction decoded by the instruction decoder 4 is accumulated in a storage having a queue structure called a reservation station. A reservation station is prepared for each type of instruction. The reservation station for execution (RSE) 6 for fixed-point calculation, the reservation station for branch (RSBR) 8 for a branch instruction, and the like are examples of a reservation station. Instructions accumulated in the reservation stations are executed out of order from the first to be ready for execution.

Instructions decoded by the instruction decoder 4 are each assigned an instruction identification (IID) according to the order the instructions are decoded. An IID is an example of an identifier for instruction identification. The instructions assigned IIDs are sent to the CSE 9 in the order the IIDs are assigned. The CSE 9 is an example of a circuit which performs completion processing of an instruction. The CSE 9 has a storage having a queue structure in which instructions decoded by the instruction decoder 4 are accumulated in the order the instructions are to be executed and a completion processing circuit. The completion processing circuit of the CSE 9 receives completion reports for processes from the RSBR 8, the arithmetic units 12, the primary data cache 11, and the like. The completion processing circuit of the CSE 9 performs instruction completion processing on the basis of a received completion report and information accumulated in the queue. The instruction completion processing is called COMMIT. An instruction decoded by the instruction decoder 4 is accumulated in the queue of the CSE 9. The instruction accumulated in the queue of the CSE 9 waits for a report on completion of instruction processing. Completion reports for instructions accumulated in the reservation stations and executed out of order are sent to the CSE 9. The completion processing circuit of the CSE 9 subjects an instruction corresponding to a completion report to COMMIT among instructions waiting for completion reports accumulated in the queue of the CSE 9 according to the original execution sequence of a program. When the instruction is subjected to COMMIT, resource updating is performed.

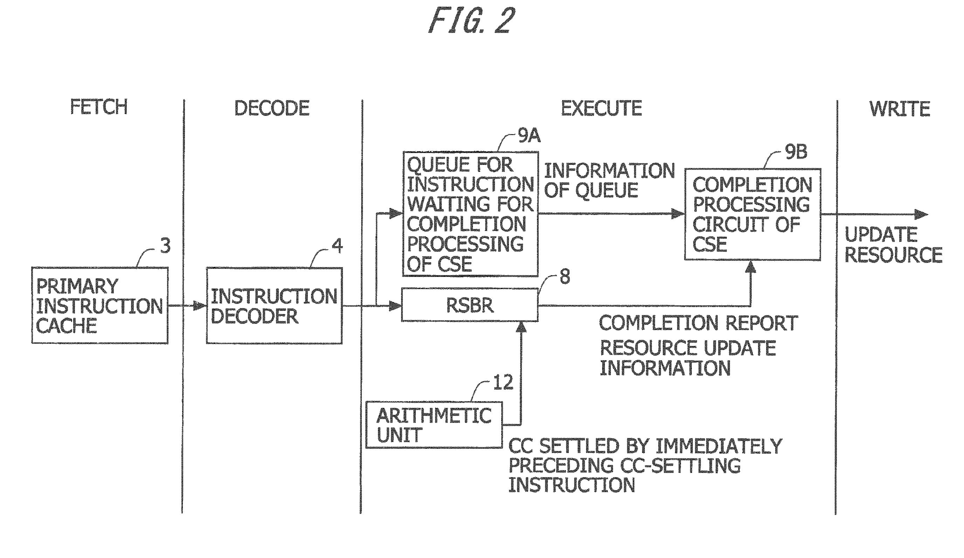

FIG. 2 is a chart illustrating processing of a branch instruction. The branch instruction processing will be described with reference to FIG. 2. An instruction is fetched from the primary instruction cache 3. The fetched instruction is decoded by the instruction decoder 4. The decoded instruction is assigned an IID. The instruction assigned the IID is accumulated in a queue 9A for instructions waiting for completion processing of the CSE 9 (hereinafter referred to as the queue 9A of the CSE 9). The queue 9A of the CSE 9 is an example of a completion processing waiting storage unit in which the identifiers of instructions waiting for completion processing are accumulated according to the execution sequence of a program. An instruction which is determined to be a branch instruction as a result of the decoding is accumulated in the RSBR 8. A branch instruction accumulated in the RSBR 8 waits for branch determination in the branch instruction to become possible. In the branch instruction, whether a branch is taken (TAKEN) or is not taken (NOT TAKEN) is settled (resolved), depending on a value of a register called the condition code (CC) register 19. Thus, a resolution in a subsequent branch instruction comes after completion of an instruction which changes the condition code. Note that the CC register 19 is updated when the instruction that changes the condition code is subjected to COMMIT. However, it takes time to perform branch determination in the RSBR 8 after the CC register 19 is updated. The condition code calculated in the arithmetic unit 12 may be sent from the arithmetic unit 12 to the RSBR 8. The RSBR 8 may perform branch determination on the basis of the condition code sent from the arithmetic unit 12. When branch determination becomes possible, the RSBR 8 performs branch determination. The RSBR 8 sends a completion report for a branch instruction and resource update information to a completion processing circuit 9B of the CSE 9. Examples of the resource update information include TAKEN and NOT TAKEN described above. The RSBR 8 is an example of a branch instruction execution management unit which manages completion of a branch instruction. The completion processing circuit 9B of the CSE 9 receives the report from the RSBR 8, performs completion processing of a branch instruction corresponding to the completion report among instructions waiting for completion reports accumulated in the queue 9A of the CSE 9, and performs resource updating. The completion processing circuit 9B of the CSE 9 is an example of a completion processing unit which activates resource update processing accompanying execution of a branch instruction.

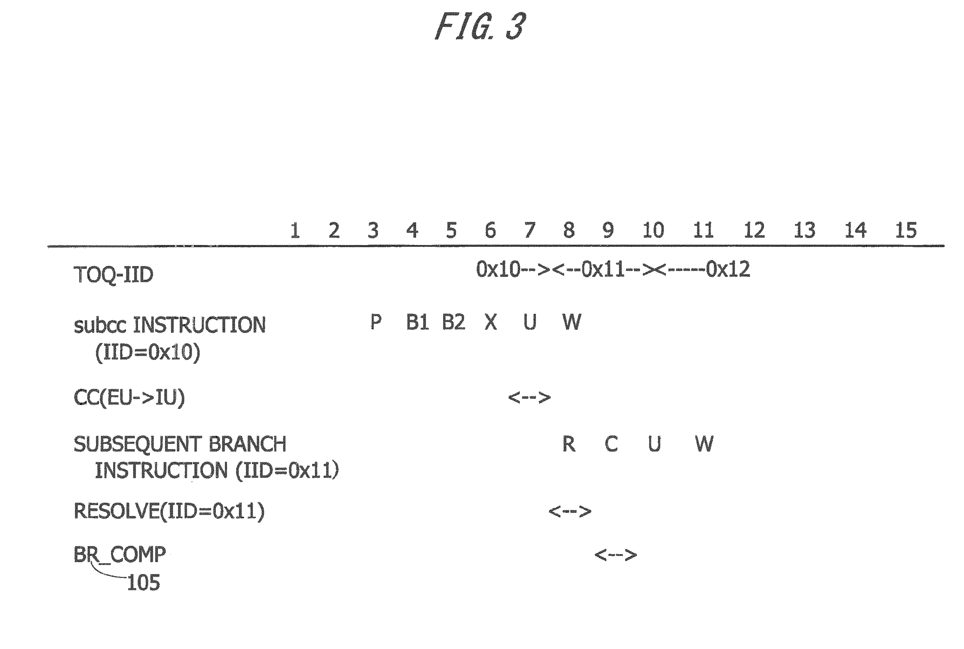

FIG. 3 is a chart illustrating a flow of processing from an instruction which changes the condition code to a branch instruction in the superscalar processor. The abscissa axis in FIG. 3 represents a clock of the processor. The ordinate axis in FIG. 3 represents the type of an instruction to be executed. In FIG. 3, a subcc instruction is illustrated as an instruction which changes the condition code. The description "TOQ-IID" in FIG. 3 denotes the IID of an instruction at the top of the queue 9A of the CSE 9. The description "subcc INSTRUCTION(IID=0x10)" denotes that the IID of a subcc instruction illustrated in FIG. 3 is 0x10. The description "CC(EU→IU)" denotes that the condition code as a result of the subcc instruction is transmitted from the arithmetic unit 12 to the RSBR 8. Reference character EU denotes the arithmetic unit 12 while reference character IU denotes the RSBR 8. The description "SUBSEQUENT BRANCH INSTRUCTION(IID=0x11)" denotes that the IID of a branch instruction which performs branch determination on the basis of the condition code settled by the subcc instruction is 0x11. The description "RESOLVE(IID=0x11)" denotes that whether a branch in the subsequent branch instruction (IID=0x11) is taken or not taken is settled. Reference character BR_COMP denotes an example of a signal which indicates completion of the subsequent branch instruction (IID=0x11).

A subcc instruction is executed in a five-stage pipeline, Priority (P), Buffer 1 (B1), Buffer 2 (B2), Execute (X), Update (U), and Write (W). In a P cycle, the reservation stations each select one with a high priority among from instructions waiting to be executed and send the instruction to the arithmetic unit 12. In B1 and B2 cycles, the arithmetic unit 12 prepares itself to execute the instruction sent from the reservation station. In an X cycle, the arithmetic unit 12 executes the instruction. In a U cycle, the CSE 9 performs instruction completion determination. In a W cycle, update signals for resources update the resources, such as the program counter 18.

A branch instruction is executed in a four-stage pipeline, Resolve (R), Complete (C), Update (U), and Write (W). In an R cycle, whether a branch in the branch instruction is taken (TAKEN) or not taken (NOT TAKEN) is settled. In a C cycle, an instruction completion report is sent from the RSBR 8 to the completion processing circuit 9B of the CSE 9. In a U cycle, the CSE 9 performs instruction completion determination. In a W cycle, update signals for the resources update the resources.

The processing in each cycle will be described below with reference to FIG. 3. In a seventh cycle, the condition code as a result of the subcc instruction is sent from the arithmetic unit 12 to the RSBR 8. In an eighth cycle, branch determination in the subsequent branch instruction is performed on the basis of the condition code sent in the seventh cycle. In a ninth cycle, the branch instruction is completed. A BR_COMP signal 105 indicating completion of a branch instruction is generated. In a tenth cycle, a resource update signal is generated. In an 11th cycle, update signals for the resources update the resources on the basis of a WRITE signal.

### [Documents of Prior Arts]

### [Patent document]

[Patent document 1] Japanese Laid-Open Patent Publication No. 2004-021711

### SUMMARY

The CSE 9 waits for the condition code to be settled in order to complete a branch instruction. The condition code is settled on the basis of, e.g., a result of executing a different instruction. For this reason, dependence of a branch instruction on a different instruction is likely to develop. A branch instruction is thus likely to wait for completion. As a result, the performance of the processor may decrease.

Under the circumstances, it is an object of the present proposal to speed up completion of a branch instruction.

The present proposal discloses an arithmetic processing unit including a branch instruction execution management unit configured to accumulate a branch instruction waiting to be executed and to manage completion of a branch instruction that is executed when a branch condition in the branch instruction is settled, a completion processing waiting storage unit configured to accumulate an identifier of an instruction waiting for completion processing according to an execution sequence of a program, a completion processing unit configured to activate resource update processing due to execution of a branch instruction when the completion processing unit receives an execution completion report for the branch instruction from the branch instruction execution management unit and identified by the identifier, and a promotion unit configured to, when an identifier accumulated at the top of the completion processing waiting storage unit indicates a branch instruction, cause the completion processing unit to activate the resource update processing without waiting for the execution completion report for the branch instruction.

According to the present proposal, completion of a branch instruction can be speeded up.

### BRIEF DESCRIPTION OF DRAWINGS

FIG. 1 is a diagram illustrating the configuration of a superscalar processor;
FIG. 2 is a chart illustrating processing of a branch instruction;
FIG. 3 is a chart illustrating a flow of processing from an instruction which changes a condition code to a branch instruction in the superscalar processor;
FIG. 4 is a diagram illustrating a plurality of processors, memories connected to the processors, and an interconnect control unit which performs I/O control between the processors and an external device;
FIG. 5 is a chart illustrating a flow from an instruction which changes a condition code to COMMIT processing of a branch instruction in a system according to a comparative example;
FIG. 6 is a chart illustrating the details of processing by components in each cycle in the system according to the comparative example;
FIG. 7 is a diagram illustrating a COMMIT processing circuit of a processor according to the comparative example;
FIG. 8 is a chart illustrating a flow of processing from an instruction which changes a condition code to a branch instruction in a system according to a first embodiment;
FIG. 9 is a diagram illustrating the configuration of COMMIT processing according to the first embodiment;
FIG. 10 is a diagram illustrating a COMMIT processing circuit of a processor according to the first embodiment;
FIG. 11 is a diagram illustrating the configuration of COMMIT processing according to a first modification;
FIG. 12 is a diagram illustrating a COMMIT processing circuit of a processor according to the first modification;
FIG. 13 is a chart illustrating pipeline processing from an instruction which changes a condition code to a branch instruction in a system according to the first modification;
FIG. 14 is a chart illustrating the details of processing by components in each cycle in the first modification;
FIG. 15 is a chart illustrating pipeline processing from an instruction which changes the condition code to a branch instruction when an inhibiting signal generation circuit generates an inhibiting signal in the first modification;
FIG. 16 is a chart illustrating the details of processing by the components in each cycle when the inhibiting signal is generated by an inhibiting signal generation circuit 23, in the first modification; and
FIG. 17 is a diagram illustrating an inhibiting signal generation circuit when the present proposal is applied to a processor having an SMT function.

### DESCRIPTION OF EMBODIMENTS

Embodiments to be disclosed in the present proposal will be described below with reference to the drawings. The configurations of the embodiments below are illustrative only, and the present proposal is not limited to the configurations of the embodiments disclosed below.

### <Comparative Example>

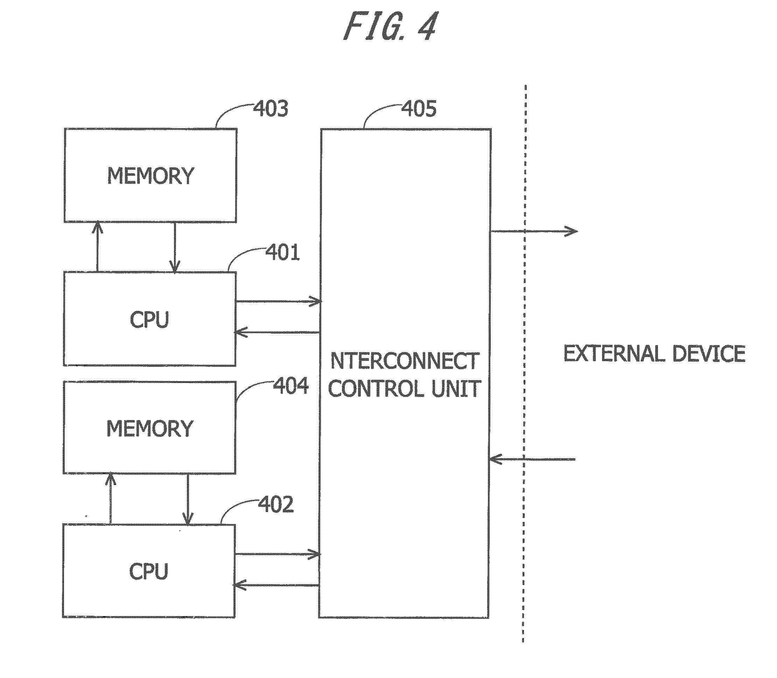

A system will be illustrated as a comparative example which performs COMMIT processing of a branch instruction after receiving a completion report for the branch instruction. FIG. 4 is a diagram illustrating a plurality of processors (a CPU 401 and a CPU 402), memories (a memory 403 and a memory 404) connected to the processors, and an interconnect control unit 405 which performs I/O control between the processors and an external device. The system according to the comparative example can be applied to, for example, the CPU 401 or 402 in FIG. 4. The system according to the comparative example may be a superscalar processor having an out-of-order function and a pipeline function as illustrated in FIG. 1.

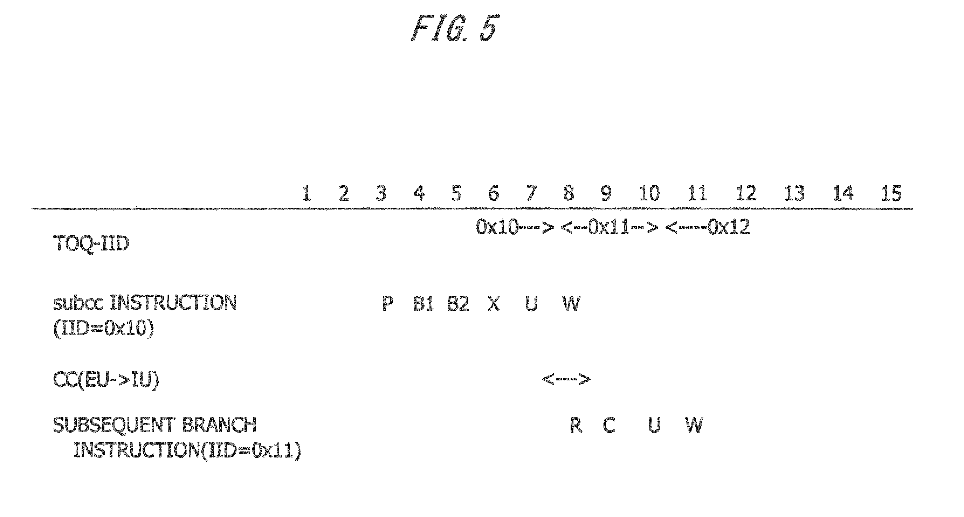

FIG. 5 is a chart illustrating a flow from an instruction which changes a condition code to COMMIT processing of a branch instruction in the system according to the comparative example. The abscissa axis in FIG. 5 represents a clock of a processor. The ordinate axis in FIG. 5 represents the type of an instruction to be executed. In FIG. 5, a subcc instruction is illustrated as an instruction which changes the condition code. The meanings of the descriptions "TOQ-IID," "subcc INSTRUCTION(IID=0x11)," "CC(EU→IU)," and "SUBSEQUENT BRANCH INSTRUCTION(IID=0x11)" are the same as those in FIG. 3, and a description thereof will be omitted.

COMMIT processing of a branch instruction in the system according to the comparative example will be described with reference to FIG. 5. In a seventh cycle, the condition code as a result of a subcc instruction is sent from an arithmetic unit 12 to an RSBR 8. In an eighth cycle, branch determination in a subsequent branch instruction is performed on the basis of the condition code sent in the seventh cycle. In a ninth cycle, the branch instruction is completed. In a tenth cycle, a resource update signal is generated. In an eleventh cycle, update signals for resources update the resources on the basis of a WRITE signal.

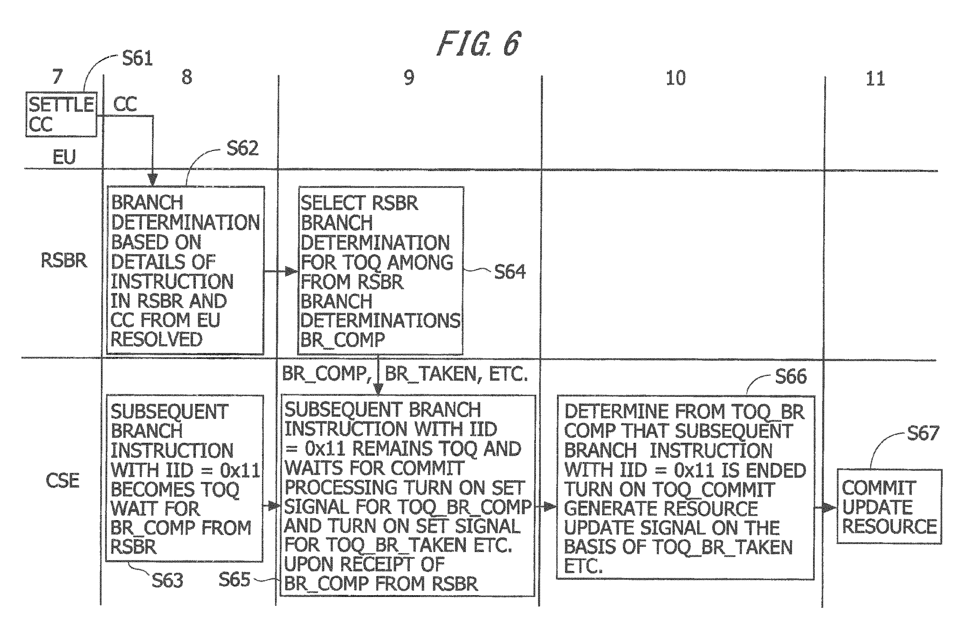

FIG. 6 is a chart illustrating the details of processing by components in each cycle in the system according to the comparative example. The abscissa axis in FIG. 6 represents a clock of the processor. The ordinate axis in FIG. 6 represents a component to perform processing.

Processing performed by the components in each cycle will be described with reference to FIG. 6. In the seventh cycle, the condition code as the result of the subcc instruction is sent from the arithmetic unit 12 to the RSBR 8 (S61). In the eighth cycle, the RSBR 8 determines whether to branch on the basis of a branch condition based on the details of the instruction in the RSBR 8 and the condition code (S62). Upon completion of the subcc instruction, the subsequent branch instruction becomes the top (hereinafter referred to as a TOQ-CSE) in a queue 9A of a CSE 9. The branch instruction as the TOQ-CSE waits for a BR_COMP signal 105 which is a completion report from the RSBR 8 (S63). In the ninth cycle, the RSBR 8 selects a piece of branch determination information to be sent to the CSE 9 among from pieces of branch determination information. The RSBR 8 generates the BR_COMP signal 105 and a BR_TAKEN signal on the basis of the selected piece of branch determination information (S64). In the queue 9A of the CSE 9, the branch instruction as the TOQ-CSE waits for COMMIT processing. Upon receipt of the BR_COMP signal 105 and the BR_TAKEN signal, a completion processing circuit 9B of the CSE 9 generates a TOQ_BR_COMP signal and a TOQ_BR_TAKEN signal (S65). From the TOQ_BR_COMP signal, the completion processing circuit 9B of the CSE 9 determines that the branch instruction is completed. The completion processing circuit 9B of the CSE 9 generates a TOQ_COMMIT signal which is a COMMIT signal. The completion processing circuit 9B of the CSE 9 further generates a WRITE signal which is a resource update signal on the basis of the TOQ_BR_TAKEN signal and the like (S66). Update signals for the resources update the resources on the basis of the WRITE signal (S67).

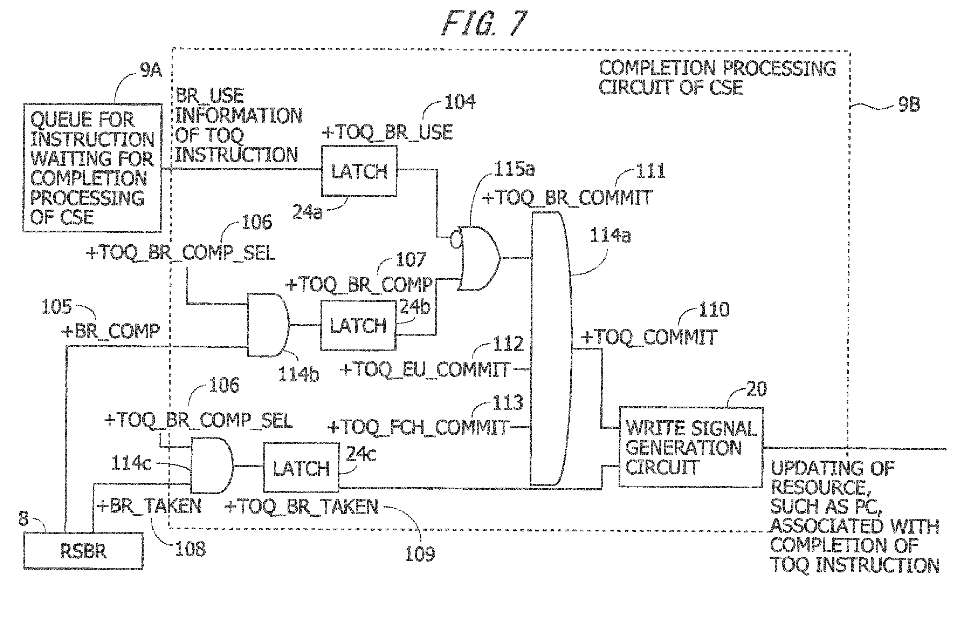

FIG. 7 is a diagram illustrating a COMMIT processing circuit of the processor according to the comparative example. FIG. 7 illustrates a portion corresponding to the CSE 9 and the RSBR 8 in FIG. 1. As illustrated in FIG. 7, the CSE 9 according to the comparative example has the queue 9A of the CSE 9 and the completion processing circuit 9B of the CSE 9. The completion processing circuit 9B of the CSE 9 has a WRITE signal generation circuit 20, latches 24a to 24c, AND circuits 114a to 114c, and an OR circuit 115a.

COMMIT processing according to the comparative example will be described with reference to FIG. 7. If a branch instruction is a TOQ-CSE instruction, the queue 9A of the CSE 9 generates a TOQ_BR_USE signal 104 indicating that the branch instruction is a TOQ-CSE instruction. The TOQ_BR_USE signal 104 is saved in the latch 24a. When a branch instruction is completed, the RSBR 8 generates the BR_COMP signal 105 indicating completion of a branch instruction. If a branch instruction in the RSBR 8 is a TOQ-CSE instruction, a TOQ_BR_COMP_SEL signal 106 is generated. The TOQ_BR_COMP_SEL signal 106 is a signal indicating that a branch instruction executed in the RSBR 8 is a TOQ-CSE instruction. The TOQ_BR_COMP_SEL signal 106 is generated in the completion processing circuit 9B of the CSE 9 if, for example, the IID of an instruction, for which the BR_COMP signal 105 is sent from the RSBR 8, and the IID of a TOQ-CSE instruction match. The AND circuit 114b performs an AND operation between the TOQ_BR_COMP_SEL signal 106 and the BR_COMP signal 105 sent from the RSBR 8 to generate a TOQ_BR_COMP signal 107. The TOQ_BR_COMP signal 107 is a signal indicating completion of a TOQ-CSE branch instruction. The TOQ_BR_COMP signal 107 is saved in the latch 24b. The AND circuit 114c performs an AND operation between the TOQ_BR_COMP_SEL signal 106 and a BR_TAKEN signal 108 from the RSBR 8 to generate a TOQ_BR_TAKEN signal 109. The TOQ_BR_TAKEN signal 109 is a signal indicating that a branch in a TOQ-CSE branch instruction is taken (TAKEN). The TOQ_BR_TAKEN signal 109 is saved in the latch 24c.

It can be seen from the TOQ_BR_COMP signal 107 saved in the latch 24b that a TOQ-CSE branch instruction is completed. It can be seen, if the TOQ_BR_USE signal 104 is not asserted, that a TOQ-CSE instruction is not a branch instruction. For this reason, the OR circuit 115a performs an OR operation between a result of performing a NOT operation on the TOQ_BR_USE signal 104 saved in the latch 24a and the TOQ_BR_COMP signal 107 saved in the latch 24b to generate a TOQ_BR_COMMIT signal 111. The TOQ_BR_COMMIT signal 111 is an example of a signal indicating that COMMIT processing of a TOQ-CSE branch instruction may be performed.

The AND circuit 114a generates a TOQ_COMMIT signal 110 indicating completion of a TOQ-CSE instruction. The TOQ_COMMIT signal 110 is generated through an AND operation among the TOQ_BR_COMMIT signal 111, a TOQ_EU_COMMIT signal 112, and a TOQ_FCH_COMMIT signal 113.

The TOQ_EU_COMMIT signal 112 is an example of a signal indicating that COMMIT processing of a TOQ-CSE instruction executed in an execution unit of the processor may be performed. An instruction which is executed in the execution unit of the processor will be referred to as an EU instruction hereinafter. The TOQ_EU_COMMIT signal 112 is generated through, for example, a logical operation. An OR operation between a - TOQ_EU_USE signal and a TOQ_EU_COMP signal is an example of the logical operation that generates the TOQ_EU_COMMIT signal 112. The TOQ_EU_COMP signal is an example of a signal indicating that a TOQ-CSE EU instruction is completed. The -TOQ_EU_USE signal is an example of a signal indicating that a TOQ-CSE instruction is not an EU instruction. If a TOQ-CSE instruction is a branch instruction, the TOQ-CSE instruction is not an EU instruction, and the -TOQ_EU_USE signal is generated. As a result, the TOQ_EU_COMMIT signal 112 is generated.

The TOQ_FCH_COMMIT signal 113 is an example of a signal indicating that COMMIT processing of a TOQ-CSE instruction using an FCH port may be performed. An instruction using an FCH port will be referred to as an FCH instruction hereinafter. The TOQ_FCH_COMMIT signal 113 is generated through, for example, a logical operation. An OR operation between a -TOQ_FCH_USE signal and a TOQ_FCH_COMP signal is an example of the logical operation that generates the TOQ_FCH_COMMIT signal 113. The TOQ_FCH_COMP signal is an example of a signal indicating that a TOQ-CSE FCH instruction is completed. The -TOQ_FCH_USE signal is an example of a signal indicating that a TOQ-CSE instruction is not an FCH instruction. If a TOQ-CSE instruction is a branch instruction, the TOQ-CSE instruction is not an FCH instruction, and the -TOQ_FCH_USE signal is generated. As a result, the TOQ_FCH_COMMIT signal 113 is generated. Note that a LOAD instruction and a STORE instruction are examples of an FCH instruction.

That is, if the TOQ_BR_COMMIT signal 111, the TOQ_EU_COMMIT signal 112, and the TOQ_FCH_COMMIT signal 113 are generated, it can be seen that a TOQ-CSE instruction is completed. Thus, the AND circuit 114a generates the TOQ_COMMIT signal 110 by performing an AND operation among the TOQ_BR_COMMIT signal 111, the TOQ_EU_COMMIT signal 112, and the TOQ_FCH_COMMIT signal 113.

The WRITE signal generation circuit 20 generates a WRITE signal which is resource update information on the basis of the TOQ_COMMIT signal 110 and the TOQ_BR_TAKEN signal 109 saved in the latch 24c. Update signals for the resources update the resources on the basis of the WRITE signal.

In the comparative example, completion processing of a branch instruction is performed by waiting for the BR_COMP signal 105 from the RSBR 8.

### <First Embodiment>

In the comparative example, COMMIT processing is performed after completion of a branch instruction. A first embodiment illustrates COMMIT processing of a branch instruction which is performed without waiting for completion of the branch instruction. A system according to the first embodiment can be applied to, for example, the CPU 401 or 402 in FIG. 4. The system according to the first embodiment may be a superscalar processor having an out-of-order function and a pipeline function as illustrated in FIG. 1. The processor in FIG. 1 and the CPUs 401 and 402 in FIG. 4 are examples of an arithmetic processing unit. A branch instruction is assumed to be completed in a predetermined number of cycles after a condition code is settled. The first embodiment will illustrate a case where the predetermined number of cycles are two cycles.

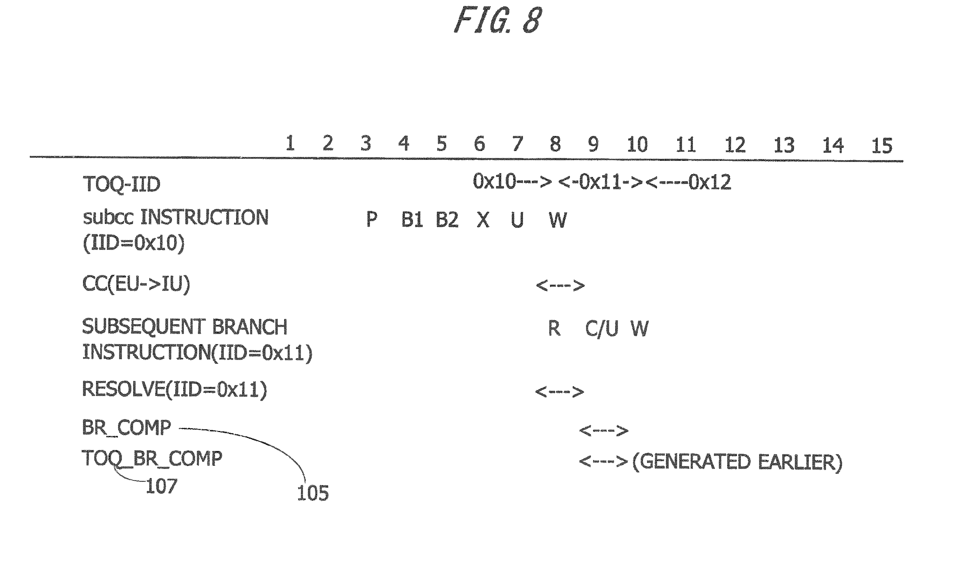

FIG. 8 is a chart illustrating a flow of processing from an instruction which changes the condition code to a branch instruction in the system according to the first embodiment. The abscissa axis in FIG. 8 represents a clock of a processor. The ordinate axis in FIG. 8 represents the type of an instruction to be executed. A subcc instruction is illustrated here as an instruction which changes the condition code. TOQ_BR_COMP is an example of a signal indicating completion of a subsequent branch instruction as a TOQ-CSE. The meanings of the descriptions "TOQ-IID," "subcc INSTRUCTION(IID=0x11)," "CC(EU→IU)," "SUBSEQUENT BRANCH INSTRUCTION(IID=0x11)," "RESOLVE(IID=0x11)," and "BR_COMP" are the same as those in FIG. 3, and a description thereof will be omitted.

COMMIT processing of a branch instruction according to the first embodiment will be described with reference to FIG. 8. In a seventh cycle, the condition code as a result of a subcc instruction is sent from an arithmetic unit 12 to an RSBR 8. In an eighth cycle, branch determination in a subsequent branch instruction is performed on the basis of the condition code sent in the seventh cycle. In a ninth cycle, the branch instruction is completed. Without waiting for a BR_COMP signal 105 to be generated, a TOQ_BR_COMP signal 107 indicating completion of a TOQ-CSE branch instruction is generated. Upon completion of the branch instruction, the BR_COMP signal 105 indicating completion of a branch instruction is generated. A WRITE signal is generated on the basis of a BR_TAKEN signal 108 and the like. In a tenth cycle, update signals for resources update the resources on the basis of the WRITE signal.

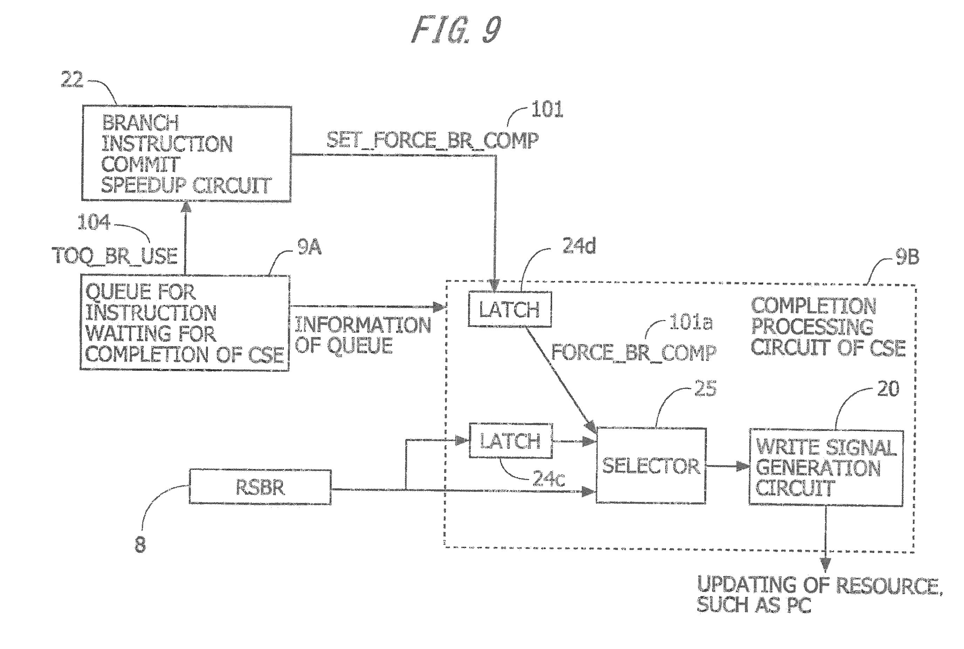

FIG. 9 is a diagram illustrating the configuration of COMMIT processing according to the first embodiment. FIG. 9 illustrates a portion corresponding to the RSBR 8 and the CSE 9 of the processor illustrated in FIG. 1. As illustrated in FIG. 9, the system according to the first embodiment has the queue 9A of the CSE 9, the completion processing circuit 9B of the CSE 9, a branch instruction COMMIT speedup circuit 22 which speeds up COMMIT of a branch instruction, and a selector 25.

If a branch instruction becomes a TOQ-CSE, the queue 9A of the CSE 9 generates a TOQ_BR_USE signal 104. Upon receipt of the TOQ_BR_USE signal 104, the branch instruction COMMIT speedup circuit 22 generates a SET_FORCE_BR_COMP signal 101 which starts completion processing of a branch instruction. In the generation of the SET_FORCE_BR_COMP signal 101, the branch instruction COMMIT speedup circuit 22 need not wait for the BR_COMP signal 105 that is a branch instruction completion signal. The branch instruction COMMIT speedup circuit 22 is an example of a promotion unit.

If a TOQ-CSE instruction is a branch instruction, an instruction executed before the branch instruction which changes the condition code is presumed to have been completed. The condition code used for branch determination is presumed to be settled. The branch instruction is thus expected to be completed in the predetermined number of cycles. The first embodiment illustrates a case where a branch instruction is completed in two cycles as the predetermined number of cycles after the condition code is settled. For this reason, if a branch instruction becomes a TOQ-CSE instruction, the branch instruction is expected to be completed in a next cycle. When a branch instruction becomes a TOQ-CSE instruction, the TOQ_BR_COMP signal 107 indicating completion of a branch instruction in the CSE 9 is generated. The completion processing circuit 9B of the CSE 9 need not wait for the BR_COMP signal 105 indicating completion of a branch instruction from the RSBR 8. As a result, COMMIT of a branch instruction is performed one cycle earlier than in the comparative example. For this reason, transmission of resource update information to a WRITE signal generation circuit 20 with the same timing as in the comparative example is too late for generation of a WRITE signal. Thus, in the first embodiment, a circuit which transmits resource update information to the WRITE signal generation circuit 20 one cycle earlier is added.

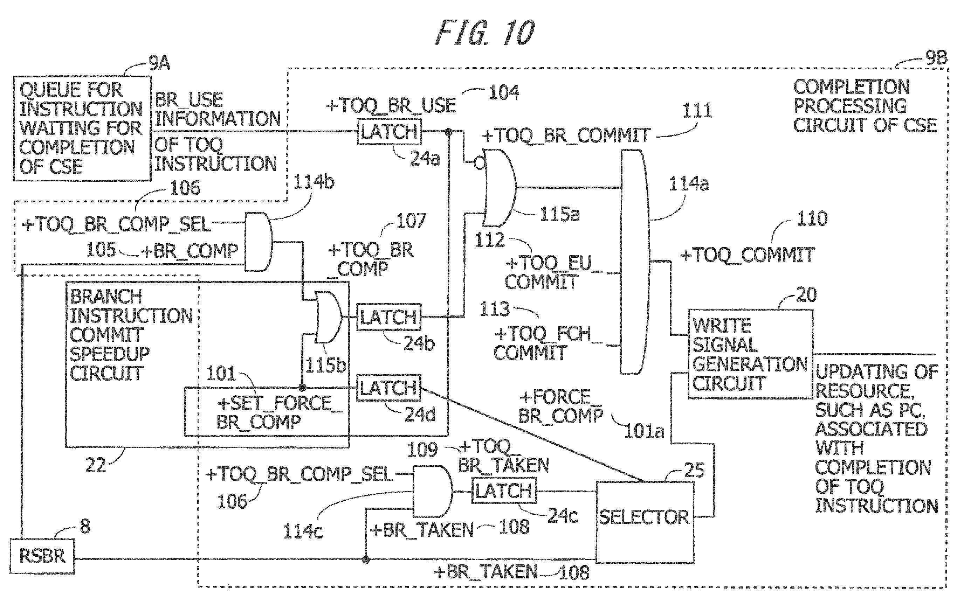

FIG. 10 is a diagram illustrating a COMMIT processing circuit of the system according to the first embodiment. FIG. 10 illustrates a portion corresponding to the CSE 9 and the RSBR 8 in FIG. 1. As illustrated in FIG. 10, the CSE 9 according to the first embodiment has the queue 9A of the CSE 9 and the completion processing circuit 9B of the CSE 9. The completion processing circuit 9B of the CSE 9 has the WRITE signal generation circuit 20, latches 24a to 24d, AND circuits 114a to 114c, and OR circuits 115a and 115b. The same components as those in the comparative example are denoted by the same reference numerals, and a description of the components will be omitted.

COMMIT processing of the system according to the first embodiment will be described with reference to FIG. 10. As described above, if a branch instruction is a TOQ-CSE instruction, the branch instruction is presumed to be completed in a next cycle. When the TOQ_BR_USE signal 104 is generated, the OR circuit 115b generates the TOQ_BR_COMP signal 107 without waiting for the BR_COMP signal 105. The TOQ_BR_COMP signal 107 is saved in the latch 24b. The lack of the need to wait for the BR_COMP signal 105 allows the TOQ_BR_COMP signal 107 to be generated one cycle earlier than in the comparative example. How the TOQ_COMMIT signal 110 is generated afterward is the same as in the comparative example, and a description thereof will be omitted.

The TOQ_BR_USE signal 104 is saved as the SET_FORCE_BR_COMP signal 101 in the latch 24d. The SET_FORCE_BR_COMP signal 101 saved in the latch 24d is transmitted as a FORCE_BR_COMP signal 101a to the selector 25. Upon receipt of the FORCE_BR_COMP signal 101a, the selector 25 selects a path which bypasses the latch 24c and transmits the BR_TAKEN signal 108 to the WRITE signal generation circuit 20. The bypassing of the latch 24c allows one-cycle earlier generation of a WRITE signal.

According to the first embodiment, completion processing of a branch instruction can be started without waiting for the BR_COMP signal 105 from the RSBR 8. It is thus possible to make the processing cycle of a branch instruction one cycle shorter than in the comparative example.

### <First Modification>

In the first embodiment, completion of a branch instruction is speeded up on the assumption that a branch instruction is completed in a predetermined number of cycles. A first modification discloses a configuration in which the present proposal is applied to a case where a branch instruction is not completed in a predetermined number of cycles.

The branch instruction COMMIT speedup circuit 22 generates the SET_FORCE_BR_COMP signal 101 on the assumption that a branch instruction is completed in a predetermined number of cycles. Thus, if a branch instruction is not completed in the predetermined number of cycles, the branch instruction COMMIT speedup circuit 22 preferably does not generate the SET_FORCE_BR_COMP signal 101. For this reason, in the first modification, an inhibiting signal generation circuit which inhibits operation of the branch instruction COMMIT speedup circuit 22 if a branch instruction is not completed in a predetermined number of cycles is added. The inhibiting signal generation circuit is an example of an inhibition unit.

Examples of a case where a branch instruction fails to be completed in a predetermined number of cycles even if the branch instruction is a TOQ-CSE include the cases (1) to (3) below. A signal which gives notice of the situations (1) to (3) below is an example of predetermined condition information.

(1) If a branch prediction for a branch instruction is wrong, an instruction is re-fetched. In this case, the present embodiment needs preparation to re-fetch an instruction and the like, and a completion report for the branch instruction may fail to be made in a predetermined number of cycles. Thus, a branch instruction may fail to be completed in the predetermined number of cycles.

(2) In the case of a register-indirect branch instruction, an operation in an exceptional case may occur, depending on the value of a branch destination address. This involves time to handle the exceptional case. For this reason, a branch instruction may fail to be completed in a predetermined number of cycles. A JUMP instruction and a RETURN instruction are examples of a register-indirect branch instruction.

(3) A case is conceivable where a branch instruction doubles as a function of settling a condition code. A BPR instruction is an example of a branch instruction doubling as the function of settling the condition code.

In this case, even if a TOQ-CSE instruction is a branch instruction, a condition code has not yet been settled. Information for branch determination may be insufficient.

In each of the cases (1) to (3) above, a branch instruction may fail to be completed in a predetermined number of cycles. Operation of the branch instruction COMMIT speedup circuit 22 needs to be inhibited. For this reason, the inhibiting signal generation circuit according to the first modification transmits an inhibiting signal to the branch instruction COMMIT speedup circuit 22 in each of the cases (1) to (3) above. Upon receipt of the inhibiting signal, the branch instruction COMMIT speedup circuit 22 does not generate the SET_FORCE_BR_COMP signal 101. As a result, a TOQ_BR_COMMIT signal 111 is generated after reception of the BR_COMP signal 105 from the RSBR 8.

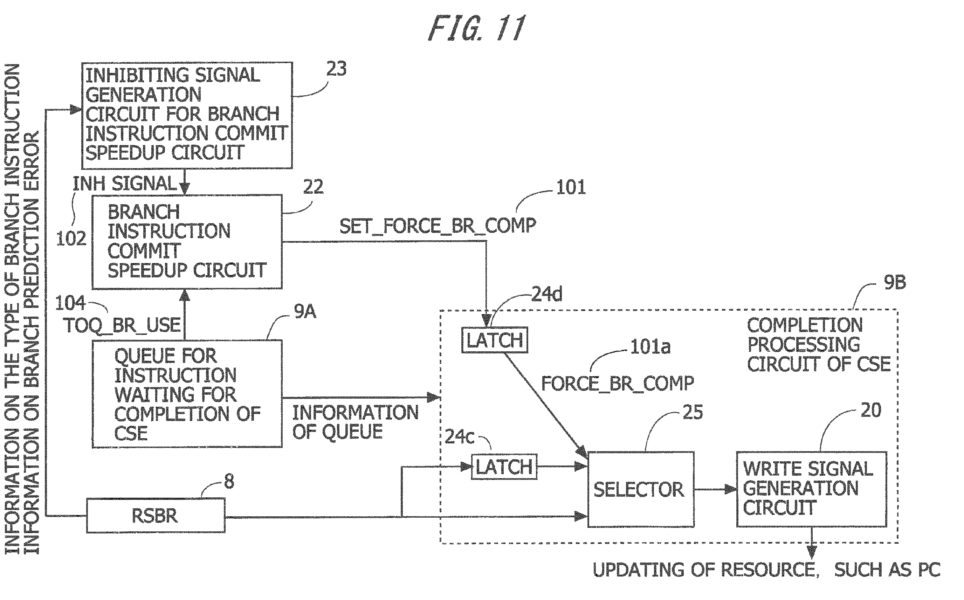

FIG. 11 is a diagram illustrating the configuration of COMMIT processing according to the first modification. FIG. 11 illustrates a portion corresponding to the CSE 9 and the RSBR 8 in FIG. 1. The first modification is obtained by adding an inhibiting signal generation circuit 23 for the branch instruction COMMIT speedup circuit (hereinafter referred to as the inhibiting signal generation circuit 23) to the configuration according to the first embodiment. The inhibiting signal generation circuit 23 is an example of a circuit which inhibits operation of the branch instruction COMMIT speedup circuit 22. In the first modification, a case is assumed where a branch instruction is completed in two cycles after a condition code is settled. The same components as those in the first embodiment are denoted by the same reference numerals, and a description thereof will be omitted.

The configuration of the COMMIT processing according to the first modification will be described with reference to FIG. 11. The RSBR 8 transmits information on the type of a branch instruction and branch misprediction information to the inhibiting signal generation circuit 23. It is determined from the report from the RSBR 8 that the branch instruction will not be completed in the predetermined number of cycles, the inhibiting signal generation circuit 23 transmits an INH_SET_FORCE_BR_COMP signal 102 which is a signal inhibiting operation of the branch instruction COMMIT speedup circuit 22 to the branch instruction COMMIT speedup circuit 22. The INH_SET_FORCE_BR_COMP signal 102 (abbreviated as an INH signal in FIG. 11) is an example of an inhibiting signal.

Upon receipt of the INH_SET_FORCE_BR_COMP signal 102, the branch instruction COMMIT speedup circuit 22 does not generate the SET_FORCE_BR_COMP signal 101. As a result, the TOQ_BR_COMMIT signal 111 is generated after reception of the BR_COMP signal 105 from the RSBR 8. Resource update information from the RSBR 8 is transmitted by the selector 25 to the WRITE signal generation circuit 20 via the latch 24c.

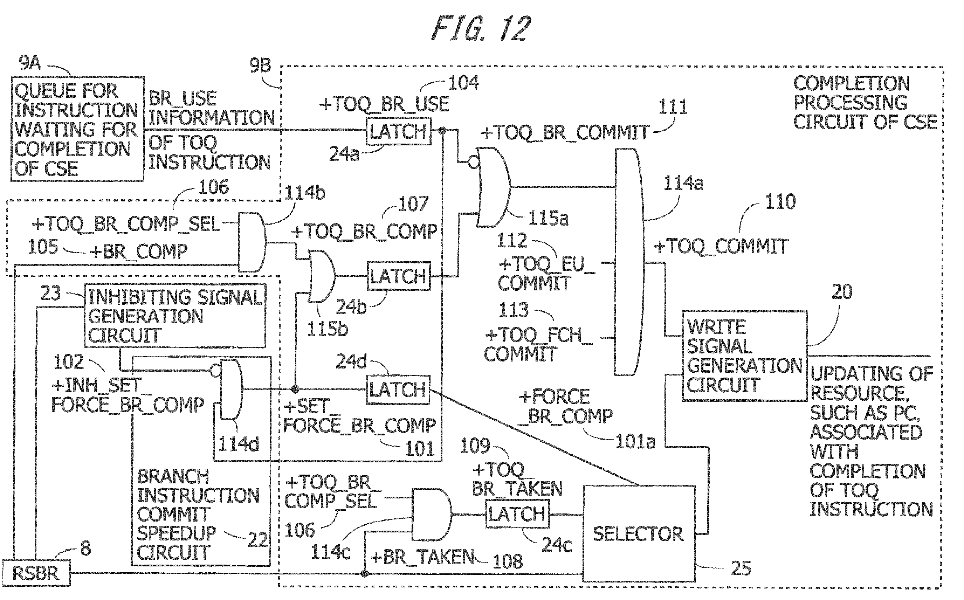

FIG. 12 is a diagram illustrating a COMMIT processing circuit of a processor according to the first modification. The COMMIT processing according to the first modification will be described with reference to FIG. 12. The same components as those in the first embodiment are denoted by the same reference numerals, and a description thereof will be omitted. The inhibiting signal generation circuit 23 generates the INH_SET_FORCE_BR_COMP signal 102 on the basis of information on a branch misprediction and the type of a branch instruction from the RSBR 8. An AND circuit 114d of the branch instruction COMMIT speedup circuit 22 performs an AND operation between a result of a NOT operation on the INH_SET_FORCE_BR_COMP signal 102 and the TOQ_BR_USE signal 104. As a result, if the INH_SET_FORCE_BR_COMP signal 102 is asserted, the SET_FORCE_BR_COMP signal 101 is not generated. With this processing, in the case of a branch misprediction or the like, the TOQ_BR_COMMIT signal 111 is generated after reception of the BR_COMP signal 105 from the RSBR 8. Resource update information from the RSBR 8 is transmitted by the selector 25 to the WRITE signal generation circuit 20 via the latch 24c.

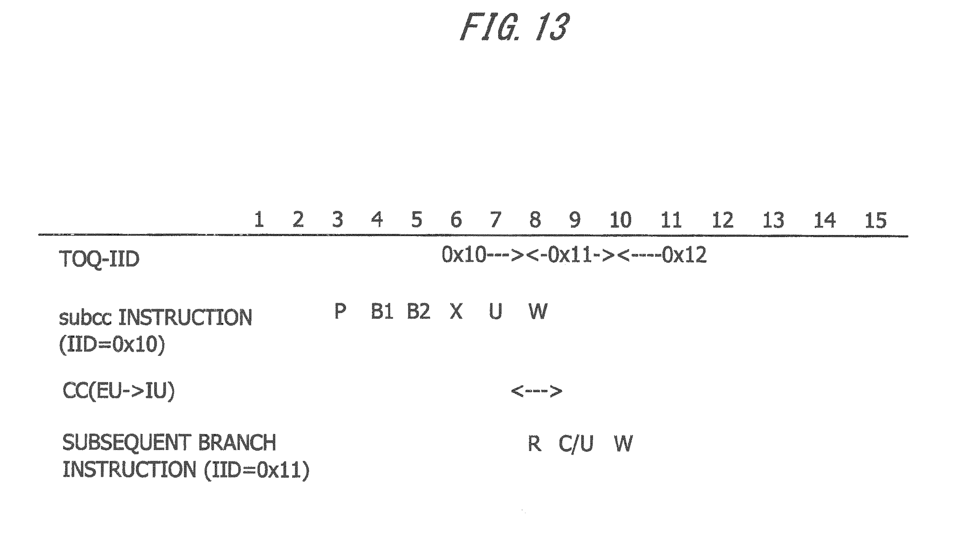

FIG. 13 is a chart illustrating pipeline processing from an instruction which changes the condition code to a branch instruction in the system according to the first modification. The abscissa axis in FIG. 13 represents a clock of the processor. The ordinate axis in FIG. 13 represents the type of an instruction to be executed. In FIG. 13, a subcc instruction is illustrated as the instruction that changes the condition code. The meanings of the descriptions "TOQ-IID," "subcc INSTRUCTION(IID=0x11)," "CC (EU->IU)," and "SUBSEQUENT BRANCH INSTRUCTION(IID=0x11)" are the same as those in FIG. 3, and a description thereof will be omitted.

COMMIT processing of a branch instruction in the system according to the first modification will be described with reference to FIG. 13. In a seventh cycle, the condition code as a result of a subcc instruction is sent from the arithmetic unit 12 to the RSBR 8. In an eighth cycle, branch determination in a subsequent branch instruction is performed on the basis of the condition code sent in the seventh cycle. In a ninth cycle, the branch instruction is completed. If the INH_SET_FORCE_BR_COMP signal 102 is not generated, the TOQ_BR_COMP signal 107 indicating completion of a TOQ-CSE branch instruction is generated without waiting for the BR_COMP signal 105 to be generated. Upon the completion of the branch instruction, the BR_COMP signal 105 indicating completion of a branch instruction is generated. A WRITE signal is generated on the basis of the BR_TAKEN signal 108 and the like. In a tenth cycle, update signals for resources update the resources on the basis of the WRITE signal.

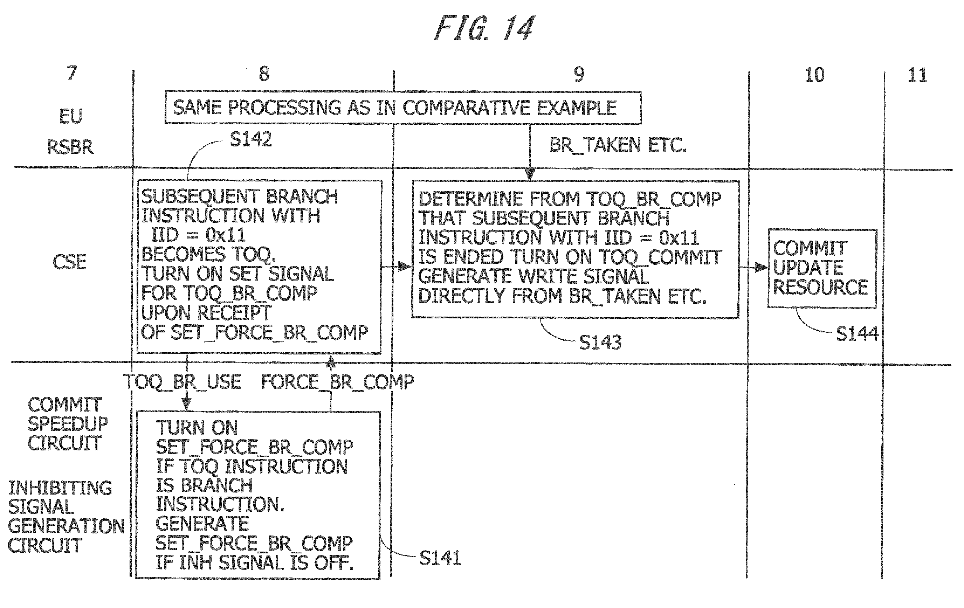

FIG. 14 is a chart illustrating the details of processing by components in each cycle in the first modification. The abscissa axis in FIG. 14 represents a clock of the processor. The ordinate axis in FIG. 14 represents a component to perform processing.

Processing performed by the components in each cycle will be described with reference to FIG. 14. In the eighth cycle, the subcc instruction is completed, and the subsequent branch instruction becomes a TOQ-CSE. If there is no INH_SET_FORCE_BR_COMP signal 102 from the inhibiting signal generation circuit 23, the SET_FORCE_BR_COMP signal 101 is generated by the branch instruction COMMIT speedup circuit 22 (S141). A set signal for the TOQ_BR_COMP signal 107 is generated on the basis of the SET_FORCE_BR_COMP signal 101 (S142). In the ninth cycle, the CSE 9 having received the TOQ_BR_COMP signal 107 generates the TOQ_BR_COMMIT signal 111. If a branch instruction is a TOQ-CSE, since the branch instruction is not an EU instruction or an FCH instruction, the TOQ_EU_COMMIT signal 112 and the TOQ_FCH_COMMIT signal 113 are generated. An AND operation among the signals, the TOQ_BR_COMMIT signal 111, the TOQ_EU_COMMIT signal 112, and the TOQ_FCH_COMMIT signal 113, is performed to generate the TOQ_COMMIT signal 110. Resource update information is transmitted from the RSBR 8 to the WRITE signal generation circuit 20. Examples of the resource update information include the BR_TAKEN signal 108. The WRITE signal generation circuit 20 combines the TOQ_COMMIT signal 110 and the update information received from the RSBR 8 to generate a WRITE signal (S143). In the tenth cycle, the branch instruction is completed, and the resources are updated on the basis of the WRITE signal (S144).

Note that, as described above, a branch instruction may fail to be completed in the predetermined number of cycles even if the branch instruction is a TOQ-CSE. If a branch instruction is not completed in the predetermined number of cycles, the branch instruction COMMIT speedup circuit 22 does not generate the SET_FORCE_BR_COMP signal 101. In this case, the inhibiting signal generation circuit 23 generates an inhibiting signal which inhibits generation of the SET_FORCE_BR_COMP signal 101. The INH_SET_FORCE_BR_COMP signal 102 is an example of the inhibiting signal. As a result, the TOQ_BR_COMMIT signal 111 is generated after reception of the BR_COMP signal 105 from the RSBR 8.

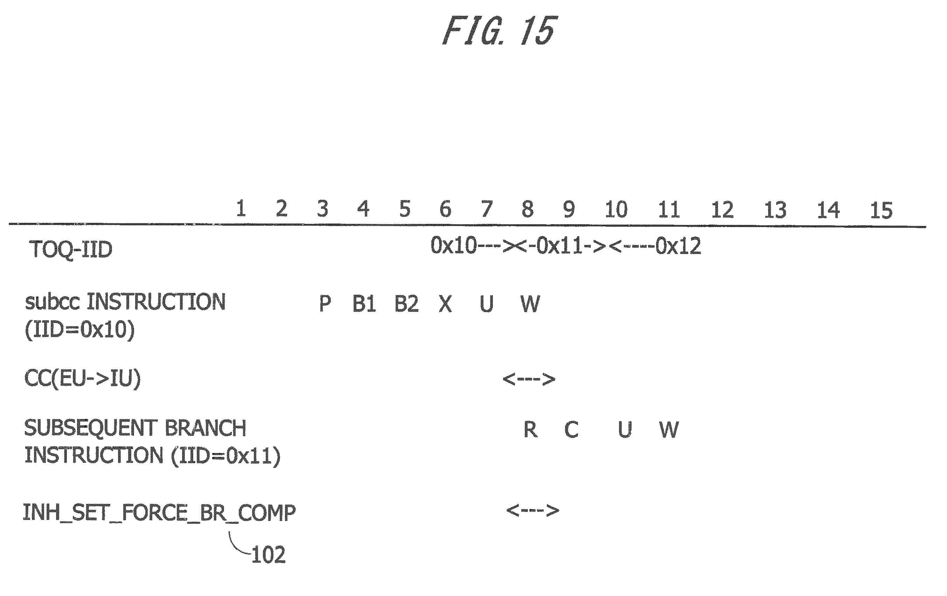

FIG. 15 is a chart illustrating pipeline processing from an instruction which changes the condition code to a branch instruction when the inhibiting signal generation circuit 23 generates an inhibiting signal in the first modification. The abscissa axis in FIG. 15 represents a clock of the processor. The ordinate axis in FIG. 15 represents the type of an instruction to be executed. In FIG. 15, a subcc instruction is illustrated as the instruction that changes the condition code. The meanings of the descriptions 'TOQ-IID," "subcc INSTRUCTION(IID=0x11)," "CC(EU->IU)," and "SUBSEQUENT BRANCH INSTRUCTION(IID=0x11)" are the same as those in FIG. 3, and a description thereof will be omitted.

COMMIT processing of a branch instruction when an inhibiting signal is generated will be described with reference to FIG. 15. In an eighth cycle, the INH_SET_FORCE_BR_COMP signal 102 is generated. Thus, the branch instruction COMMIT speedup circuit 22 does not generate the SET_FORCE_BR_COMP signal 101. Processes in a ninth cycle and afterward are the same as those in FIG. 5, and a description thereof will be omitted.

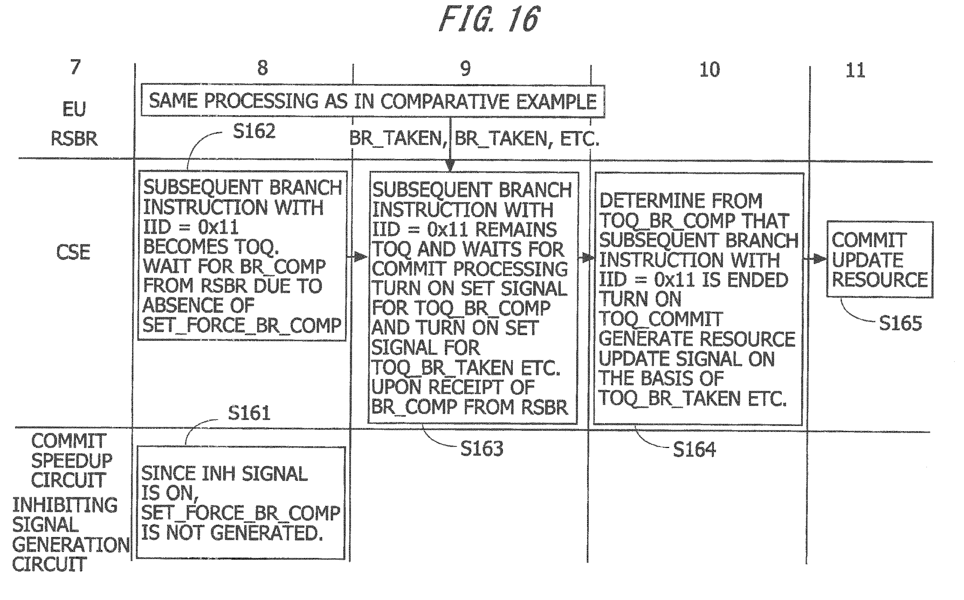

FIG. 16 is a chart illustrating processing by the components in each cycle when the inhibiting signal is generated by the inhibiting signal generation circuit 23, in the first modification. The abscissa axis in FIG. 16 represents a clock of the processor. The ordinate axis in FIG. 16 represents a component to perform processing.

Processing performed by the components in each cycle will be described with reference to FIG. 16. In the eighth cycle, for example, if an instruction is re-fetched due to a branch misprediction, the inhibiting signal generation circuit 23 generates the INH_SET_FORCE_BR_COMP signal 102. For this reason, the branch instruction COMMIT speedup circuit 22 does not generate the SET_FORCE_BR_COMP signal 101 (S161). The subsequent branch instruction having become a TOQ-CSE is completed after reception of the BR_COMP signal 105 from the RSBR 8 (S162). Processes in a ninth cycle and afterward are the same as those in FIG. 6, and a description thereof will be omitted.

In the first modification, if a branch instruction is not completed in the predetermined number of cycles, operation of the branch instruction COMMIT speedup circuit 22 is inhibited. As a result, the present proposal can also be applied to a processor in which a branch instruction may fail to be completed in a predetermined number of cycles.

### <Second Modification>

In each of the first embodiment and the first modification, the present proposal is applied to a processor free from thread switching. A second modification will illustrate a configuration in which the present proposal is applied to a processor having a simultaneous multithreading (SMT) function. SMT is an example of a function of simultaneously executing a plurality of threads by a single processor. To apply the present proposal to a processor having an SMT function, a condition under which the inhibiting signal generation circuit 23 generates an inhibiting signal may be added. The second modification will illustrate a configuration in which COMMIT processing is performed while selecting one thread for one cycle. In this case, threads to perform processing in two consecutive cycles may be different. If the threads are different, executed instructions may be different. Thus, generation of the TOQ_BR_COMP signal 107 using the SET_FORCE_BR_COMP signal 101 in a different thread is impossible. When switching between threads is detected, the inhibiting signal generation circuit 23 inhibits operation of the branch instruction COMMIT speedup circuit 22. Thus, the completion processing circuit 9B of the CSE 9 performs COMMIT processing after reception of the BR_COMP signal 105 transmitted from the RSBR 8.

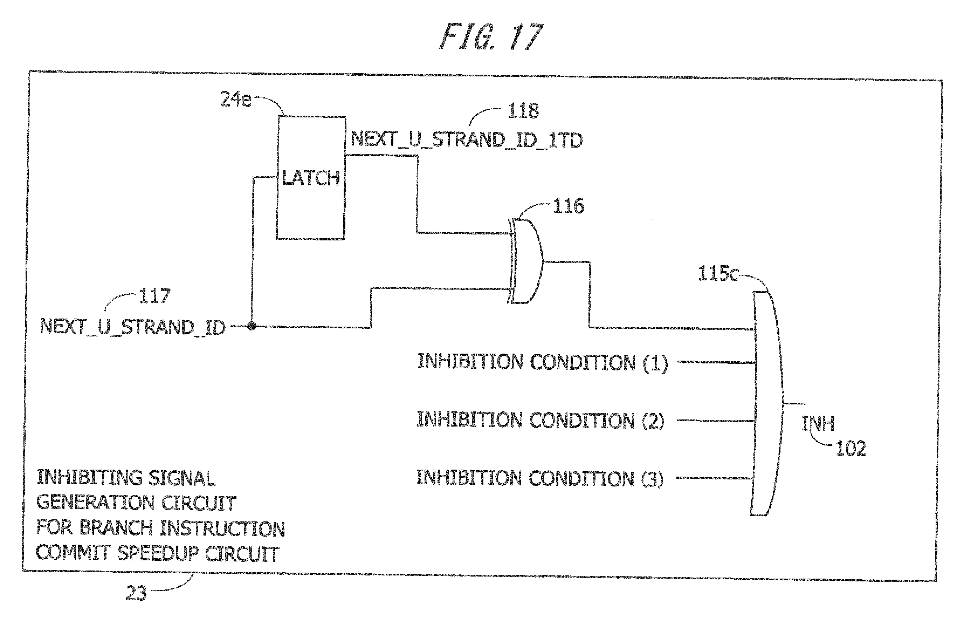

FIG. 17 is a diagram illustrating the inhibiting signal generation circuit 23 when the present proposal is applied to a processor having an SMT function. Inhibition conditions added in the second modification will be described with reference to FIG. 17. Inhibition conditions (1) to (3) illustrated in FIG. 17 correspond to the cases (1) to (3), respectively, illustrated in the first modification as examples of a case where a branch instruction fails to be completed in a predetermined number of cycles. In FIG. 17, a NEXT_U_STRAND_ID signal 117 indicates a thread in which U cycle completion processing is to be performed next. The second modification illustrates a case where the number of threads is two. That is, in this case, the value of the NEXT_U_STRAND_ID signal 117 is, for example, 0 or 1. The NEXT_U_STRAND_ID signal 117 is saved as a NEXT_U_STRAND_ID_1TD signal 118 in a latch 24e. The latch 24e is an example of a thread management unit. If the value of the NEXT_U_STRAND_ID signal 117 in the current cycle is different from the value of the NEXT_U_STRAND_ID_1TD signal 118 for an immediately preceding cycle saved in the latch 24e, thread switching has occurred. The NEXT_U_STRAND_ID signal 117 and the NEXT_U_STRAND_ID_1TD signal 118 are examples of a thread identifier. If thread switching occurs, an XOR circuit 116 outputs an inhibiting signal to an OR circuit 115c. The OR circuit 115c generates an INH_SET_FORCE_BR_COMP signal 102 (abbreviated as INH in FIG. 17). The mechanism for sensing thread switching is an example of predetermined condition information.

According to the second modification, thread switching can be sensed. As a result, the present proposal can be applied to a processor having an SMT function.

The embodiment and modifications disclosed above can be combined. For example, the first modification and the second modification can be combined. This case can support SMT while supporting a case where a branch instruction fails to be completed in a predetermined number of cycles.

## Claims

1. An arithmetic processing unit comprising:
a branch instruction execution management unit (8) configured to accumulate a branch instruction waiting to be executed and to manage completion of a branch instruction that is executed when a branch condition in the branch instruction is settled;
a completion processing waiting storage unit (9A) configured to accumulate an identifier of an instruction waiting for completion processing according to an execution sequence of a program;
a completion processing unit (9B) configured to activate resource update processing due to execution of a branch instruction when the completion processing unit receives an execution completion report for a branch instruction from the branch instruction execution management unit and identified by the identifier; and
a promotion unit (22) configured to , when an identifier accumulated at the top of the completion processing waiting storage unit indicates a branch instruction, cause the completion processing unit to activate the resource update processing without waiting for the execution completion report for the branch instruction.

2. The arithmetic processing unit according to Claim 1, further comprising an inhibition unit (23) configured to receive predetermined condition information and to inhibit operation of the promotion unit.

3. The arithmetic processing unit according to Claim 2, wherein
the predetermined condition information is information which gives notice of a branch misprediction for a branch instruction from the branch instruction execution management unit.

4. The arithmetic processing unit according to Claim 2 or Claim 3,
wherein
the predetermined condition information is information which gives notice of a type of a branch instruction from the branch instruction execution management unit.

5. The arithmetic processing unit according to Claim 2 to Claim 4,
wherein
the arithmetic processing unit is an arithmetic processing unit which concurrently executes a plurality of threads,
the arithmetic processing unit further comprising:
a thread management unit (24e) configured to hold a thread identifier for identifying a thread; and
the predetermined condition information is information which is transmitted when a thread identifier of a current thread (117) is different from the thread identifier held in the thread management unit (118).

6. A method for controlling an arithmetic processing unit having a branch instruction execution management unit configured to accumulate a branch instruction waiting to be executed and to manage completion of a branch instruction that is executed when a branch condition in the branch instruction is settled and a completion processing waiting storage unit configured to accumulate an identifier of an instruction waiting for completion processing according to an execution sequence of a program, the method comprising:
activating resource update processing due to execution of a branch instruction when receiving an execution completion report for a branch instruction from the branch instruction execution management unit and identified by the identifier; and
causing resource update processing of the activating to activate the resource update processing without waiting for the execution completion report for the branch instruction when an identifier accumulated at the top of the completion processing waiting storage unit indicates a branch instruction.
